# EUROPÄISCHE PATENTSCHRIFT

(11) **EP 1 038 740 B1**
(45) Veröffentlichungstag und Bekanntmachung des Hinweises auf die Patenterteilung: **26.02.2003**
(21) Anmeldenummer: 99111714.4
(22) Anmeldetag: 17.06.1999
(51) Int. Cl.: B60T 1/04, B60T 7/20, B60B 33/02, B60T 11/04, B60S 9/18

(54) **Bremsvorrichtung für Anhänger mit Stützrad**
Brake device for trailer with support wheel
Dispositif de freinage pour remorque à roue d'appui

(30) Priorität: 23.03.1999 DE 19913238
(43) Veröffentlichungstag der Anmeldung: 27.09.2000
(73) Patentinhaber: Trautwein, Robert, 87734 Benningen (DE)
(72) Erfinder: Trautwein, Robert, 87734 Benningen (DE)
(74) Vertreter: Pfister, Helmut, Dipl.-Ing.

(56) Entgegenhaltungen:
- DE-U- 8 627 346
- FR-A- 2 766 146
- US-A- 3 360 082
- US-A- 5 531 295

## Beschreibung

Die Erfindung betrifft eine Bremsvorrichtung für Anhänger mit Stützrad wobei das Stützrad vorzugsweise mit der Deichsel des Anhängers verbunden und schwenkbar ausgebildet ist.

Für den privaten oder auch kommerziellen Gebrauch werden häufig Anhänger, insbesondere auch für PKW's, benutzt. Hierbei handelt es sich beispielsweise um Wohnwagenanhänger, Pritschenanhänger, Pferdeanhänger oder dergleichen. In der Regel weisen diese Anhänger unter ihrer Deichsel ein Stützrad auf. Dieses Stützrad ist in der Regel während der Fahrt am PKW nicht mit dem Boden in Berührung und dient nur zur besseren Handhabung des Anhängers, wenn dieser vom Fahrzeug abgekuppelt ist. Zu diesem Zweck ist das Rad beispielsweise mittels eines senkrechten Rohres und einer Klemmschelle an der Deichsel gehalten. In der Gebrauchsstellung wird die Schelle gelöst und das Rad am unteren Ende des Rohres kann zum Beispiel mit einem Spindelantrieb auf den Erdboden gefahren werden. Nach dem Aufsetzen des Stützrades wird die Kupplung mit dem Zugfahrzeug gelöst. Meist ist das Stützrad schwenkbar, so daß ein leichtes Rangieren des Anhängers möglich ist.

Nach dem Abkuppeln des Anhängers vom Zugfahrzeug ist allerdings eine eventuell angeordnete Bremse, zum Beispiel eine Servooder Druckluft- oder auch eine elektrische oder andere Bremse, auf die Haupträder des Anhängers nicht mehr wirksam. Auf einer geneigten Standfläche kann der Anhänger deshalb unkontrolliert ins Rollen geraten. Für eine unkontrollierte Fahrt kann bei großen Anhängern auch schon ein kräftiger Windstoß genügen.

Bisher wurde eine Sicherung gegen eine unkontrollierte Fahrt des Anhängers, beispielsweise mittels Bremskeilen oder anderen untergelegten Teilen, wie Steinen, Holzstücken oder dergleichen, vorgenommen. Das hat sich insbesondere bei größeren und schwereren Anhängern als schwierig erwiesen, weil es einer einzigen Person im Regelfall nicht möglich ist, gleichzeitig Keile unter die Haupträder zu legen und die Deichsel zu steuern. Es sind also mindestens zwei Bedienungspersonen notwendig, um diese Aufgabe zu erfüllen.

Das Dokument DE-4-8 627 346.9 zeigt bereits eine Vorrichtung gemäß dem Oberbegriff des Anspruchs 1.

Die Erfindung hat es sich deshalb zur Aufgabe gemacht, eine Bremsvorrichtung für Anhänger mit Stützrädern wie oben beschrieben zu schaffen, die den abgekoppelten Anhänger zuverlässig am Davonrollen hindert und die leicht bedienbar ist.

Zur Lösung dieser Aufgabe geht die Erfindung aus von einem Stützrad für Anhänger wie oben erwähnt und schlägt vor, daß am Stützrad eine Bremsvorrichtung mit mindestens einer Arretier- und einer Lösestellung vorgesehen ist.

Dadurch, daß die Bremsvorrichtung direkt am Stützrad sitzt, wobei das Stützrad wiederum im Regelfall an der Deichsel oder in der Nähe der Deichsel angeordnet ist, wird es einer Bedienungsperson möglich, gleichzeitig Deichsel und Stützrad zu bedienen. Der im abgekoppelten Zustand anderweitig ungebremste Anhänger kann in der Lösestellung der Bremsvorrichtung ohne Schwierigkeiten rangiert werden. Sobald die gewünschte Endposition erreicht ist, wird die Arretierstellung eingestellt und der Anhänger hat einen sicheren Stand.

Der Anhänger kann nun auch nicht mehr durch die Schaukelbe-wegung/ die beim Be- oder Entladen entsteht, ins Rollen kommen.

Bei einer bevorzugten Ausführungsform der Erfindung wirken ein oder mehrere radiale Bremsbacken auf den Umfang der Lauffläche des Rades.

Eine solche Bauweise ist besonders einfach herzustellen und funktioniert ähnlich wie die Bremse eines Fahrrades. Dabei lassen sich beispielsweise Löse- und Arretierstellung mittels eines Fußhebels betätigen. Der Bremsbacken wirkt dabei zum Beispiel auf die Felge oder auf das Laufrad.

Die Bremswirkung kann, ähnlich wie bei der Fahrradbremse, mit Hilfe eines oder mehrerer Stempel, die mit einer entsprechenden nichtrutschenden Oberfläche, wie Gummi oder dergleichen, ausgestattet sind, erzielt werden.

Es kann weiter vorgesehen werden, daß die Bremse sich zwischen Löse- und Arretierstellung in einer weiteren Stellung einstellen läßt, so daß beispielsweise das Rad nur teilweise gebremst ist, was beispielsweise ein Hantieren mit dem Anhänger im abschüssigen Gelände erleichtert. Durch das teilweise gebremste Stützrad, ist hier eine gute Kontrolle über den Anhänger möglich.

Bei einer weiteren Ausführungsform der Erfindung wirken ein oder mehrere Bremsbacken auf die Seitenflächen des Rades.

Bei dieser Bauweise können beispielsweise scherenartige Bremsbacken paarweise auf die gegenüberliegenden Seitenflächen eines Rades wirken. Ausgelöst wird die Bremswirkung wiederum mittels eines entsprechenden Hebels, der vorzugsweise auch mit dem Fuß betätigbar ist. Auch ist es günstig, wenn hier eine Mittelstellung zwischen Arretier- und Lösestellung vorgesehen ist, bei der das Rad nur mehr schleifend bewegt werden kann, so daß ein Rangieren in abschüssigem Gelände möglich ist.

Es hat sich als günstig herausgestellt, wenn für die Bremsvorrichtung ein Feststellhebel vorgesehen ist. Dieser Feststellhebel, der wie oben beschrieben vorzugsweise per Fuß bedienbar ist, bestimmt die Einstellung der Bremsvorrichtung. Er kann so fixiert werden, daß eine sichere Arretierstellung gegeben ist. Der Feststellhebel muß nicht unbedingt auf die Bremsbacken wirken. Er kann bei Rädern mit beispielsweise Speichen durch diese hindurchgreifen und somit das Rad blockieren. Der Feststellhebel kann auch als Totmannsteuerung ausgebildet sein. Das bedeutet, daß das Rad arretiert ist, wenn der Hebel nicht betätigt wird, und das Rad freigegeben wird, wenn der Hebel gezogen oder betätigt wird. Die Totmannsteuerung ist natürlich auch bei einer Handbetätigung der Bremsvorrichtung realisierbar.

Bei einer weiteren bevorzugten Ausführungsform der Erfindung ist für die Bremsbacken ein Spindelantrieb vorgesehen. Ein solcher Spindelantrieb kommt sowohl für Bremsbacken, die auf die Lauffläche des Rades wirken, wie auch für solche, die auf die Seitenflächen des Rades wirken, in Frage. Durch den Spindelantrieb kann eine stufenlose Verstellung zwischen Arretierund Lösestellung erreicht werden. Insbesondere gelingt es damit, eine teilweise Blockierung des Rades zu erreichen, so daß zwar ein Rangieren möglich ist, aber das Fahrzeug nicht unkontrolliert, beispielsweise bergab, rollen kann. Zum Feststellen der Bremsbacken wird dann einfach die Spindel weitergedreht. Der Spindelantrieb kann zum Beispiel über eine Kupplung mit der Absetzvorrichtung des Stützrades zusammenwirken. So wird beim Herunterdrehen des Rades zunächst automatisch das Rad blockiert und hernach stufenlos gelöst.

Als Hebel zum Betätigen der Bremsbacken kann in einer weiteren Ausführung ein um eine Achse schwenkbarer Keil vorgesehen sein, der von Hand oder auch mit dem Fuß betätigt wird. Die Keilspitzen drücken durch die Schwenkbewegung gegen die Brembacke, die wiederum auf das Rad wirkt.

In einer weiteren Ausgestaltung der Bremsvorrichtung ist die Bremsbacke an einer federnden Lasche angeordnet, die mittels eines anders ausgestalteten Hebels gegen das Rad angestellt wird. Nach Lösen des Hebels federt die Bremsbacke in ihre Ausgangslage zurück.

Zusätzlich kann es günstig sein, falls der Anhänger längere Zeit in der gleichen Stellung verbleiben soll, diesen durch Unterlegen entsprechender Keile zu sichern. Auch das wird durch die Bremsvorrichtung am Stützrad erleichtert bzw. erst ermöglicht, da es einer Person in der Regel nicht möglich ist, gleichzeitig die Deichsel zu bedienen bzw das Fahrzeug festzuhalten und die Keile unter die Haupträder des Rades zu legen. Durch die Feststellbremse am Stützrad wird der Anhänger zunächst soweit abgebremst, daß es gelingt, die Keile unterzulegen, bevor der Anhänger wieder davonrollt.

Bei einer weiteren bevorzugten Ausführungsform der Erfindung sind eine oder mehrere Einstellschrauben für den Abstand der Bremsbacken vom Rad vorgesehen.

Die Einstellschrauben wirken ähnlich wie eine Spindel, so daß auch hier eine mehr oder weniger stufenlose Einstellmöglichkeit der Bremsbacken zwischen einer völlig gelösten Stellung und der Arretierstellung möglich ist.

Es kommen auch noch weitere Bremsvorrichtungen in Frage, beispielsweise Bremsvorrichtungen, die insbesondere auf die Felge des Rades wirken oder solche, die sich von Hand einstellen lassen.

Günstig ist es, wenn die Bremsvorrichtung dann automatisch wirksam ist, wenn der Anhänger vom Zugfahrzeug abgekoppelt ist. Im angekoppelten Zustand ist eine unbeabsichtigte Bewegung des Anhängers so gut wie ausgeschlossen, zudem sind insbesondere schwerere Anhänger mit einer zusätzlichen Bremsvorrichtung auf die Haupträder, die durch die Ankupplung an das Zugfahrzeug wirksam wird, ausgestattet. In diesem Falle ist aber die Bremswirkung auf das Stützrad auch im angekoppelten Zustand als zusätzliche Bremse einsetzbar.

Der besondere Vorteil der Erfindung wird aber dann sichtbar, wenn das Zugfahrzeug und der Anhänger getrennt sind und die Bremsen der Haupträder des Anhängers nicht mehr wirken. Durch die Bremswirkung auf das Stützrad läßt sich auch der Anhänger ohne Zugfahrzeug sichern, so daß das Zugfahrzeug als Fahrzeug' weiter einsetzbar bleibt.

In einer einfachen Ausgestaltung besteht die Bremsvorrichtung aus einem U-förmigen, abgewinkelten Element, das die Bremsbacken und die Bremshebel trägt. Dieses Element ist an der Radaufhängung des Stützrades befestigt. Die gesamte Bremsvorrichtung ist fest mit dem Stützrad verbindbar oder ist als Nachrüstsatz für Anhänger mit Stützrädern lieferbar, die bisher noch keine Bremsvorrichtung an Stützrädern aufwiesen. Die Bremsvorrichtung ist lösbar oder auch unlösbar an der Radaufhängung befestigt. Als Befestigungsmittel eignen sich vorzugsweise Schrauben, wobei dann in die Radaufhängung Bohrungen mit Innengewinde vorgesehen sein müssen, oder die gesamte Bremsvorrichtung wird an die Radaufhängung angeschweißt. In einer einfachen Ausgestaltung ist das U-förmige Element der Bremsvorrichtung über die Radachse mit dem Stützrad befestigt. Um es gegen Verdrehen zu sichern, sind Bohrungen vorgesehen, in die Schrauben oder Stifte eingeführt werden können, die mit der Radaufhängung zusammen die Bremsvorrichtung gegen Verdrehen sichern. Diese Bohrungen sind in einer vorteilhaften Ausgestaltung als Langlöcher ausgebildet, so daß der Abstand der verdrehsicherung der Dicke der Radaufhängung angepaßt werden kann.

Des weiteren betrifft die Erfindung einen Anhänger mit einem entsprechend ausgebildeten Stützrad. Als Anhänger kommen zum Beispiel Wohnwagen-, Pritschen-, Planen-, Transportanhänger für jeden Zweck, ob beruflich (Verkaufsanhänger) oder im Freizeitbereich (zum Beispiel Sport, Pferd, Segelflugzeug, Schiff) in Betracht. Der Anhänger kann dabei von beliebigen Zugfahrzeugen (PKW, LKW, etc.) gezogen werden und ist bezüglich seiner Nutzlast nicht beschränkt.

In der Zeichnung ist ein erfindungsgemäßes Ausführungsbeispiel eines Stützrades schematisch beschrieben.

Es zeigen:
- Fig. 1: eine Seitenansicht eines Stützrades bei gelöster Bremse,
- Fig. 2: eine Vorderansicht eines Stützrades mit festgezogener Bremse,
- Fig. 3: eine Vorderansicht einer Variante der Erfindung bei gelöster Bremse,
- Fig. 4: eine Vorderansicht eines Stützrades gemäß der Erfindung bei festgestellter Bremse,

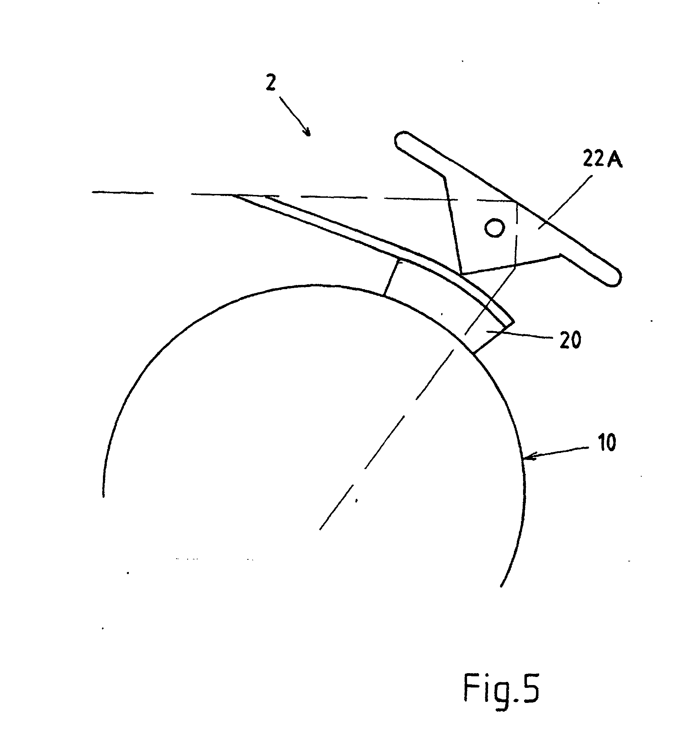

- Fig. 5: die Seitenansicht einer Ausführungsform des Feststellhebels in aktiviertem Zustand,
- Fig. 6: eine weitere Ausführungsform der Bremsvorrichtung des Stützrades,

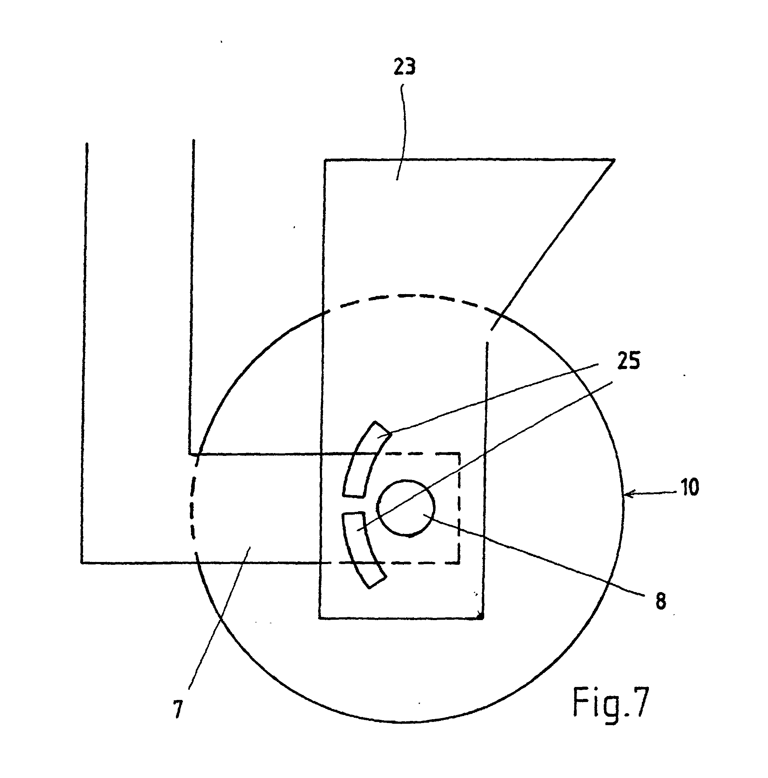

- Fig. 7: eine Ausgestaltung des U-förmigen Teils zur Halterung der Bremsbacken und des Feststellhebels der Bremsvorrichtung.

Das Stützrad 1 ist mittels des senkrechten Rohres 4 mit der nicht näher gezeigten Deichsel verbunden.

Das Stützrad 1 läßt sich mittels der Kurbel 5 in der Höhe verstellen und bleibt beispielsweise während der Fahrt des Anhängers in einer hochgezogenen Stellung. Vor dem Abkuppeln des Anhängers vom Zugfahrzeug wird die Kurbel 5 nach unten gedreht und das Rad auf den Erdboden gestellt.

Die Heb- und Senkvorrichtung 6, zum Beispiel eine Spindel, befindet sich dabei im Rohrinneren.

Das Stützrad 1 ist mittels einer Radaufhängung 7 mit dem senkrechten Rohr 4 verbunden. Die Radaufhängung 7 ist schwenkbar gelagert, also beispielsweise um das Rohr 4 drehbar und mit der Radachse 8 verbunden.

Der Reifen 13 des Stützrades 1 ist beispielsweise ein an sich bekannter Vollgummireifen bzw. ein Luftreifen, der auf einer Felge 14 sitzt.

Die Bremsvorrichtung 2 besteht im wesentlichen aus radialen oder seitlichen Bremsbacken 20,21 und dem Feststellhebel 22.

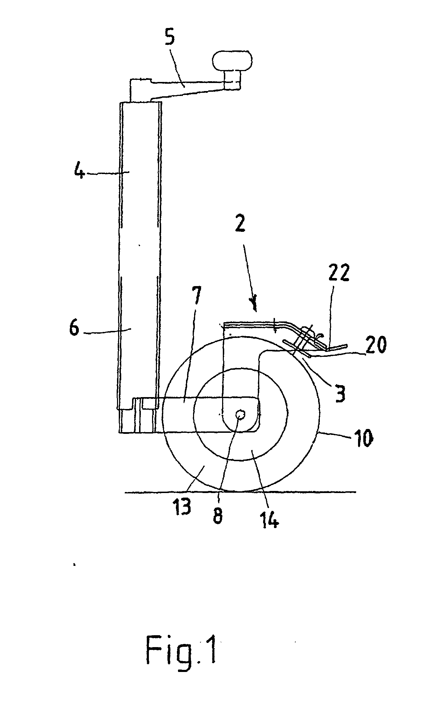

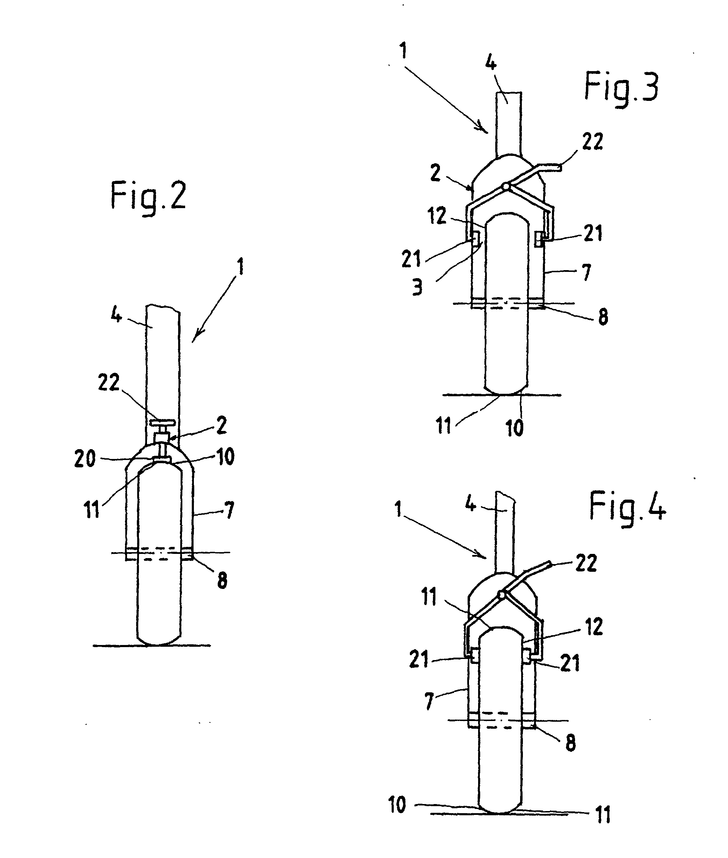

In der gelösten Stellung, wie sie in den Fig. 1 und 3 zu sehen ist, verbleibt zwischen dem Reifen 13 und den Bremsbacken 20,21 ein Abstand 3.

Die Bremsbacken 20 wirken, wie schon erwähnt, radial auf den Umfang 10 der Lauffläche 11 des Reifens 13. Es können auch mehrere Bremsbacken 20 vorgesehen sein, die entweder einen gemeinsamen Feststellhebel 22 oder jeweils zugeordnete, nicht näher gezeichnete Feststellhebel aufweisen.

Bei den seitlichen Bremsbacken, die auf die Seitenflächen des Reifens 13 wirken, wird die paarweise Anordnung, wie in den Fig. 3 und 4 gezeigt, bevorzugt. Es kann aber auch hier je nach Einsatzzweck des Anhängers und Beladungsmöglichkeit ein einziger seitlicher Bremsbacken 21 ausreichend sein. Auch ist es möglich, mehrere Paare von Bremsbacken 21 einzusetzen.

Die Bremsbacken 21 können, anstatt auf die Seitenflächen 12 des Reifens 13 zu wirken, auch auf die Felge 14 wirken.

Wird die Bremsvorrichtung 2 mit Hilfe des Feststellhebels 22 betätigt, so verschwindet der Abstand 3 zwischen Reifen 13 bzw. Felge 14 und Bremsbacken 20,21 und die Bremsbacken 20,21 liegen fest an. Eine weitere Unterstützung der Blockierungswirkung kann erreicht werden, wenn die Bremsbacken 20,21 an ihrer Oberseite, die mit dem Reifen 13 in Berührung kommt, mit einer Anti-Rutschbeschichtung, beispielsweise einer Gummiauflage, versehen sind. Auch eine entsprechende Profilierung der Lauffläche 11 bzw. der Seitenfläche 12 des Rades 1 erzielt eine derartige Wirkung.

Anstelle des Feststellhebels 22 kann ein Spindelantrieb oder eine Feststellschraube zum Betätigen der Bremsbacken 20, 21 vorgesehen werden.

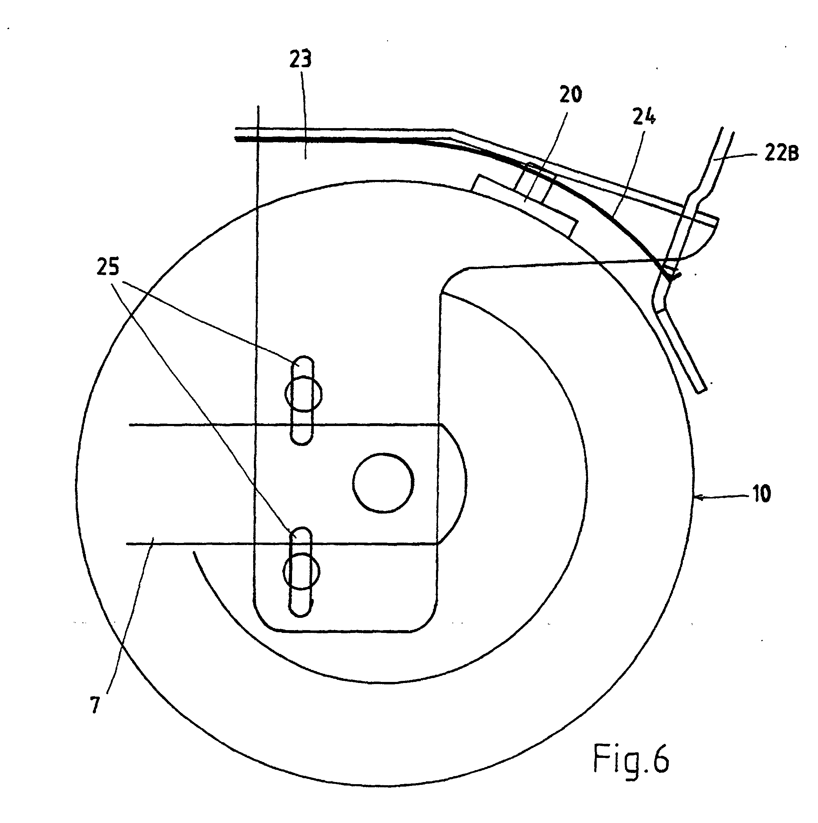

Der Feststellhebel kann unterschiedlich geformt sein. In einer weiteren Ausführungsform ist er als Keil 22a ausgebildet, wobei die Keilspitze die Bremsbacke 20 gegen das Rad 1 drückt. In der Ausgestaltung der Bremsvorrichtung nach Fig. 6 ist die Bremsbacke 20 an einer federnden Lasche 24 angeordnet, die mittels des Hebels 22b betätigt wird.

Durch die niedrige Lage der gesamten Bremsvorrichtung 2 und insbesondere des Feststellhebels 22, läßt sich dieser mühelos mit dem Fuß betätigen. Dabei ist eine Einraststellung vorgesehen, so daß die Arretierstellung der Bremsbacken 20,21 gewährleistet ist. Auch das Lösen der Bremse geschieht vorzugsweise mit Hilfe des Fußes und des Feststellhebels 22.

Die Bremsvorrichtung besteht insbesondere aus einem U-förmig gebogenen Element 23, das die Bremsbacken 20, 21 und die Bremshebel 22 bis 22b trägt. Dieses Element ist insbesondere an der Radaufhängung 7 des Stützrades 1 befestigt. Vorteilhafterweise ist es über die Achse 8 mit dem Stützrad verbunden. Um die Bremsvorrichtung, die auch als Nachrüstsatz lieferbar ist, gegen Verdrehen zu sichern, weist das U-förmige Element der Bremsvorrichtung 2 Bohrungen bzw. Langlöcher 25 auf, die sich ober- und unterhalb der Radaufhängung befinden. Mittels Stiften, die hindurchgeschoben werden oder mit Muttern gegen die Konterschrauben, die die Radaufhängung umklammern, wird das ü-förmige Element 23 der Bremsvorrichtung 2 gegen Verdrehen gesichert. Die Langlöcher 25 können aber eine Geradeausrichtung haben, sie können aber auch leicht gebogen sein.

Die Erfindung wird vorstehend im Zusammenhang mit einer Bremsvorrichtung, die insbesondere als Nachstützsatz realisierbar ist, beschrieben. Sie ist aber hierauf nicht beschränkt, sonderen bezieht sich in gleicher Weise auf ein Stützrad mit einer solchen Bremsvorrichtung, oder einen Anhänger mit einem solchen Stützrad.

Die in den abhängigen Ansprüchen angeführten Rückbeziehungen weisen auf die weitere Ausbildung des Gegenstandes des Hauptanspruches durch die Merkmale des jeweiligen ünteranspruches hin.

## Patentansprüche

1. Bremsvorrichtung (2) für Anhänger mit Stützrad, wobei das Stützrad (1) vorzugsweise mit der Deichsel des Anhängers verbunden und schwenkbar ausgebildet ist **dadurch gekennzeichnet, daß** die Bremsvorrichtung (2) am Stützrad (1) vorgesehen ist und mindestens eine Arretier- und Lösestellung aufweist.

2. Bremsvorrichtung nach Anspruch 1, **dadurch gekennzeichnet, daß** sie eine oder mehrere radiale Bremsbacken (20) aufweist, die auf den Umfang (10) der Lauffläche (11) des Rades (1) wirken.

3. Bremsvorrichtung nach einem oder beiden der vorhergehenden Ansprüche, **dadurch gekennzeichnet, daß** eine oder mehrere Bremsbacken (20) auf die Seitenflächen (12) des Rades (1) wirken.

4. Bremsvorrichtung nach einem oder mehreren der vorhergehenden Ansprüche, **dadurch gekennzeichnet, daß** ein Feststellhebel (22) vorgesehen ist.

5. Bremsvorrichtung nach einem oder mehreren der vorhergehenden Ansprüche, **dadurch gekennzeichnet, daß** für die Bremsbacken (20,21) ein Spindelantrieb vorgesehen ist.

6. Bremsvorrichtung nach einem oder mehreren der vorhergehenden Ansprüche, **dadurch gekennzeichnet, daß** der Feststellhebel (22a) die Form eine Keiles aufweist, schwenkbar an der Bremsvorrichtung (2) befestigt ist und mit seiner Spitze gegen die Bremsbacke (20) wirkt.

7. Bremsvorrichtung nach einem oder mehreren der vorhergehenden Ansprüche, **dadurch gekennzeichnet, daß** die Bremsbacke (20) an einer Feder (2) angeordnet ist, die entgegen der Federkraft mittels eines Hebels (22b) gegen das Stützrad (1) gepreßt wird.

8. Bremsvorrichtung nach einem oder mehreren der vorhergehenden Ansprüche, **dadurch gekennzeichnet, daß** eine Einstellschraube für den Abstand (3) der Bremsbacken (20,21) vom Rad (1) vorgesehen ist.

9. Bremsvorrichtung nach einem oder mehreren der vorhergehenden Ansprüche, **dadurch gekennzeichnet, daß** die Bremsvorrichtung dann automatisch wirksam ist, wenn der Anhänger vom Zugfahrzeug abgekoppelt ist.

10. Bremsvorrichtung nach einem oder mehreren der vorhergehenden Ansprüche, **dadurch gekennzeichnet, daß** die Bremsvorrichtung (2) als Totmannsteuerung ausgebildet ist.

11. Bremsvorrichtung nach einem oder mehreren der vorhergehenden Ansprüche, **dadurch gekennzeichnet, daß** die Bremsvorrichtung (2) mit der Absenkvorrichtung (6) zusammenwirkt.

12. Bremsvorrichtung nach einem oder mehreren der vorhergehenden Ansprüche, **dadurch gekennzeichnet, daß** die Bremsvorrichtung (2) aus einem U-förmigen, abgewinkelten Element (23) besteht, das die Bremsbacken (20) und die Bremshebel (22) trägt, und dieses Element (23) an der Radaufhängung (7) des Stützrades (1) befestigt ist.

13. Bremsvorrichtung nach einem oder mehreren der vorhergehenden Ansprüche, **dadurch gekennzeichnet**, daß'das die Bremsbacken (20) und Bremshebel (22) tragende Element (23) lösbar an der Radaufhängung (7) befestigt ist.

14. Bremsvorrichtung nach einem oder mehreren der vorhergehenden Ansprüche, **dadurch gekennzeichnet, daß** das Element (23) mindestens zwei Paar Bohrungen (25) aufweist, die Mittel aufnehmen zur Befestigung des Elementes (23) an der Radaufhängung (7).

15. Bremsvorrichtung nach einem oder mehreren der vorhergehenden Ansprüche, **dadurch gekennzeichnet, daß** die Bohrungen (25) als Langlöcher ausgebildet sind.

16. Stützrad mit einer Bremsvorrichtung nach einem oder mehreren der vorhergehenden Ansprüche.

17. Anhänger mit Stützrad nach Anspruch 16.

## Claims

1. Braking arrangement (2) for trailers with support wheel the support wheel (1) being preferably connected with the shaft of the trailer and designed swivelling, **characterised in that** the braking arrangement (2) is provided at the support wheel (1) and has at least one locking and release position.

2. Braking arrangement according to claim 1, **characterised in that** it has one or more radial brake blocks (20) which act on the circumference (10) of the cover (11) of the wheel (1).

3. Braking arrangement according to one or both of the preceding claims, **characterised in that** one or more brake blocks (20) act on the sides (12) of the wheel (1).

4. Braking arrangement according to one or more of the preceding claims, **characterised in that** a locking lever (22) is provided.

5. Braking arrangement according to one or more of the preceding claims, **characterised in that** a spindle drive is provided for the brake blocks (20, 21).

6. Braking arrangement according to one or more of the preceding claims, **characterised in that** the locking lever (22a) is wedge-shaped, mounted swivelling on the braking arrangement (2) and acts with its tip against the braking block (20).

7. Braking arrangement according to one or more of the preceding claims, **characterised in that** the brake block (20) is arranged on a spring (2) which is pressed against the spring power by means of a lever (22b) towards the support wheel (1).

8. Braking arrangement according to one or more of the preceding claims, **characterised in that** an adjusting screw is provided for the distance (3) of the brake blocks (20, 21) from the wheel (1).

9. Braking arrangement according to one or more of the preceding claims, **characterised in that** the braking arrangement is then effective automatically, when the trailer is unhitched from the pulling vehicle.

10. Braking arrangement according to one or more of the preceding claims, **characterised in that** the braking arrangement (2) is designed as a dead's man control.

11. Braking arrangement according to one or more of the preceding claims, **characterised in that** the braking arrangement (2) co-operates with the lowering arrangement (6).

12. Braking arrangement according to one or more of the preceding claims, **characterised in that** the braking arrangement (2) comprises a U-shaped, bent element (23) which supports the braking blocks (20) and the brake levers (22), and that this element (23) is fastened on the wheel suspension (7) of the support wheel (1).

13. Braking arrangement according to one or more of the preceding claims, **characterised in that** the element (23) which supports the brake blocks (20) and the brake levers (22) is fastened releasable on the wheel suspension (7).

14. Brake arrangement according to one or more of the preceding claims, **characterised in that** the element (23) has at least two pairs of bores (25) which hold means for fastening of the element (23) to the wheel suspension (7) .

15. Braking arrangement according to one or more of the preceding claims, **characterised in that** the bores (25) are designed as elongated holes.

16. Support wheel with a braking arrangement according to one or more of the preceding claims.

17. Trailer with support wheel according to claim 16.

## Revendications

1. Dispositif de freinage (2) pour remorques ayant une roue jockey, cette roue jockey (1) étant de préférence liée à l'essieu de la remorque et pouvant être pivotée, **caractérisé en ce que** le dispositif de freinage (2) est situé au niveau de la roue jockey (1) et possède au moins une position d'arrêt et une position de roue libre.

2. Dispositif de freinage selon la revendication 1, **caractérisé en ce qu'**il possède une ou plusieurs mâchoires de frein (20) radiales agissant sur la circonférence (10) de la bande de roulement (11) de la roue (1).

3. Dispositif de freinage selon une ou les deux revendications précédentes, **caractérisé en ce qu'**une ou plusieurs mâchoires de frein (20) agissent sur les faces latérales (12) de la roue (1).

4. Dispositif de freinage selon une ou plusieurs des revendications précédentes, **caractérisé en ce qu'**il existe un levier de verrouillage (22).

5. Dispositif de freinage selon une ou plusieurs des revendications précédentes, **caractérisé en ce que** les mâchoires de frein (20,21) sont actionnées par une commande à vis sans fin.

6. Dispositif de freinage selon une ou plusieurs des revendications précédentes, **caractérisé en ce que** le levier de verrouillage (22a) possède une forme de coin et est fixé de manière pivotante au niveau du dispositif de freinage (2), appuyant avec sa pointe sur la mâchoire de frein (20).

7. Dispositif de freinage selon une ou plusieurs des revendications précédentes, **caractérisé en ce que** la mâchoire de frein (20) est liée à un ressort (2) et s'appuie sur la roue jockey (1 ) sous la pression exercée sur un levier (22b) et contre la force du ressort.

8. Dispositif de freinage selon une ou plusieurs des revendications précédentes, **caractérisé en ce qu'**il existe une vis d'ajustement (3) de distance entre les mâchoires de frein (20,21) et la roue jockey (1).

9. Dispositif de freinage selon une ou plusieurs des revendications précédentes, **caractérisé en ce que** le dispositif de freinage se mette automatiquement en action dès que la remorque est dételée de la voiture de traction.

10. Dispositif de freinage selon une ou plusieurs des revendications précédentes, **caractérisé en ce que** le dispositif de freinage (2) possède une sécurité "d'homme mort"

11. Dispositif de freinage selon une ou plusieurs des revendications précédentes, **caractérisé en ce que** le dispositif de freinage (2) est lié au système d'abaissement (6) de la remorque.

12. Dispositif de freinage selon une ou plusieurs des revendications précédentes, **caractérisé en ce que** le dispositif de freinage (2) consiste en un élément coudé (23) en forme de U portant les mâchoires de frein (20) et les leviers de freinage (22) et **en ce que** cet élément (23) est fixé à la suspension (7) de la roue jockey (1).

13. Dispositif de freinage selon une ou plusieurs des revendications précédentes, **caractérisé en ce que** l'élément (23) portant les mâchoires de frein (20) et les leviers de frein (22) est fixé à la suspension (7) de la roue de façon amovible.

14. Dispositif de freinage selon une ou plusieurs des revendications précédentes, **caractérisé en ce que** l'élément (23) possède au moins deux paires de perçages (25) recevant des moyens de fixation de l'élément (23) à la suspension (7) de la roue.

15. Dispositif de freinage selon une ou plusieurs des revendications précédentes, **caractérisé en ce que** les perçages (25) possèdent une forme oblongue.

16. Roue jockey ayant un dispositif de freinage selon une ou plusieurs des revendications précédentes.

17. Remorque avec roue jockey selon la revendication 16.
